# EUROPEAN PATENT APPLICATION

(11) **EP 4 814 687 A1**
(43) Date of publication of application: **30.09.2026**
(21) Application number: 25197204.8
(22) Date of filing: 21.08.2025
(51) Int. Cl.: G06F 3/12, G06T 15/50

(54) **INFORMATION PROCESSING SYSTEM, PROGRAM, AND INFORMATION PROCESSING METHOD**

(30) Priority: 24.03.2025 JP 2025048549; 25.03.2025 JP 2025050668
(71) Applicant: FUJIFILM Business Innovation Corp., Minato-ku Tokyo (JP)
(72) Inventor: TAKAISHI, Shinya, Yokohama-shi, Kanagawa (JP); ARIEDA, Kota, Yokohama-shi, Kanagawa (JP); NISHIKUNI, Yuichi, Yokohama-shi, Kanagawa (JP)
(74) Representative: Becker Kurig & Partner Patentanwälte mbB

(57) **Abstract**

An information processing system includes: a processor configured to: execute control of receiving settings for multiple parameters that include an observation environment and that affect appearance of printed matter; and execute control of loading an environment map corresponding to the observation environment after the multiple parameters are set.

## Description

### BACKGROUND OF THE INVENTION

### (i) Field of the Invention

The present invention relates to an information processing system, a program, and an information processing method.

### (ii) Description of Related Art

There is a technique of displaying, before printing, a preview of appearance of printed matter in a real space.

### SUMMARY OF THE INVENTION

The appearance of the printed matter is affected by, for example, an observation environment, a type of toner, a type of paper, and a color gamut of a display. In the current system, an environment map is loaded each time any parameter is changed. Therefore, for example, the environment map needs to be loaded four times in order to check the appearance in which four parameters are combined.

An object of the present disclosure is to improve work efficiency of a user, unlike a case where an environment map is loaded in a case where even one parameter that affects preview display is changed.

According to a first aspect of the present disclosure, there is provided an information processing system including: a processor configured to: execute control of receiving settings for a plurality of parameters that include an observation environment and that affect appearance of printed matter; and execute control of loading an environment map corresponding to the observation environment after the plurality of parameters are set.

According to a second aspect of the present disclosure, in the information processing system according to the first aspect, the processor may be configured to: in a case where the plurality of parameters include an unset parameter, execute control of not loading the environment map even in a case where an instruction to display or update a simulation image is received.

According to a third aspect of the present disclosure, in the information processing system according to the second aspect, the processor may be configured to: in a case where the instruction to display or update the simulation image is received in a state where the unset parameter remains in the plurality of parameters, execute control of notifying of presence of the unset parameter.

According to a fourth aspect of the present disclosure, in the information processing system according to the third aspect, the processor may be configured to: execute control of including information on the unset parameter in the notification of the presence of the unset parameter.

According to a fifth aspect of the present disclosure, in the information processing system according to any one of the first to fourth aspects, the processor may be configured to: execute control of changing a display mode of a button for receiving an instruction to display or update a simulation image before and after receiving the settings for all of the plurality of parameters.

According to a sixth aspect of the present disclosure, in the information processing system according to the fifth aspect, the processor may be configured to: execute control of not displaying the button until the settings for all of the plurality of parameters are received.

According to a seventh aspect of the present disclosure, in the information processing system according to any one of the first to sixth aspects, the processor may be configured to: execute control of enabling reception of a setting for the observation environment after receiving the settings for the plurality of parameters excluding the observation environment.

According to an eighth aspect of the present disclosure, in the information processing system according to the seventh aspect, the processor may be configured to: in a case where an instruction to display or update a simulation image is received after receiving the settings for the plurality of parameters excluding the observation environment, execute control of displaying a screen for receiving the setting for the observation environment.

According to a ninth aspect of the present disclosure, in the information processing system according to any one of the first to eighth aspects, the processor may be configured to: execute control of displaying a screen prompting an operation of a button for providing an instruction to display or update a simulation image after receiving the settings for all of the plurality of parameters.

According to a tenth aspect of the present disclosure, in the information processing system according to any one of the first to ninth aspects, the processor may be configured to: include, in the plurality of parameters excluding the observation environment, any one or more of a type of special color used for printing the printed matter, a type of paper, a color of paper, or a color gamut of a display.

According to an eleventh aspect of the present disclosure, there is provided a program for causing a computer to realize: a function of receiving settings for a plurality of parameters that include an observation environment and that affect appearance of printed matter; and a function of loading an environment map corresponding to the observation environment after the plurality of parameters are set.

According to a twelfth aspect of the present disclosure, there is provided an information processing method including: receiving settings for a plurality of parameters that include an observation environment and that affect appearance of printed matter; and loading an environment map corresponding to the observation environment after the plurality of parameters are set.

According to the first aspect of the present disclosure, it is possible to improve the work efficiency of the user, unlike a case where the environment map is loaded in a case where even one parameter that affects the preview display is changed.

According to the second aspect of the present disclosure, it is possible to prevent the environment map from being loaded in a state where all of the plurality of parameters are not set.

According to the third aspect of the present disclosure, it is possible to notify the user of the presence of the unset parameter.

According to the fourth aspect of the present disclosure, it is possible to support an operation of the user.

According to the fifth aspect of the present disclosure, it is possible to easily check progress of the settings for the plurality of parameters.

According to the sixth aspect of the present disclosure, it is possible to disable reception of the instruction to display or update the simulation image until the setting of the plurality of parameters is completed.

According to the seventh aspect of the present disclosure, it is possible to prevent forgetting to set the parameters other than the observation environment.

According to the eighth aspect of the present disclosure, by receiving the setting for the observation environment after setting other parameters, it is possible to prevent forgetting to set the other parameters.

According to the ninth aspect of the present disclosure, it is possible to notify the user that preparations for loading the environment map are completed.

According to the tenth aspect of the present disclosure, it is possible to load the environment map after a parameter other than the observation environment is selected.

According to the eleventh aspect of the present disclosure, it is possible to improve the work efficiency of the user, unlike a case where the environment map is loaded in a case where even one parameter that affects the preview display is changed.

According to the twelfth aspect of the present disclosure, it is possible to improve the work efficiency of the user, unlike a case where the environment map is loaded in a case where even one parameter that affects the preview display is changed.

### BRIEF DESCRIPTION OF THE DRAWINGS

Exemplary embodiment(s) of the present invention will be described in detail based on the following figures, wherein:
FIG. 1 is a diagram illustrating a configuration example of a printing system;
FIG. 2 is a diagram illustrating an example of a hardware configuration of a controller;
FIG. 3 is a diagram illustrating a functional configuration of the controller;
FIG. 4 is a diagram illustrating an example of a display process of a preview image;
FIG. 5 is a diagram illustrating a display example of a simulation image based on an initial orientation;
FIG. 6 is a diagram illustrating a loading state of an environment map;
FIG. 7 is a diagram illustrating a display example of a simulation image in which all parameter settings are reflected;
FIG. 8 is a diagram illustrating another display example of a simulation image in which all parameter settings are reflected;
FIG. 9 is a diagram illustrating a screen change in a case where a "display update" button is operated in a state where there is an unset parameter;
FIG. 10 is a diagram illustrating another screen change in a case where a "display update" button is operated in a state where there is an unset parameter;
FIG. 11 is a diagram illustrating another screen change in a case where a "display update" button is operated in a state where there is an unset parameter;
FIG. 12 is a diagram illustrating a display example of a "display update" button in a case where an unset parameter remains and a display example of a "display update" button in a case where all parameters have been set;
FIG. 13 is a diagram illustrating a display example of a "display update" button in a case where an unset parameter remains and another display example of a "display update" button in a case where all parameters have been set;
FIG. 14 is a diagram illustrating another example of a display process of a preview image;
FIG. 15 is a diagram illustrating a display example of a simulation image based on an initial orientation;
FIG. 16 is a diagram illustrating a dialog box displayed by an operation of a "display update" button; and
FIG. 17 is a diagram illustrating a display example of a dialog box prompting a user who has completed setting all parameters affecting appearance of printed matter to operate a "display update" button.

### DETAILED DESCRIPTION OF THE INVENTION

Hereinafter, exemplary embodiments of the present invention will be described with reference to the accompanying drawings.

### <Term>

Printed matter refers to any paper or other flat media paper on which text or images are printed.

Media used for printing include, for example, unprocessed paper and processed paper. The processed paper includes, for example, glossy paper, coated paper, matte paper, and special paper. The special paper includes, for example, paper subjected to foil stamping and paper containing glitter.

An image forming apparatus refers to an apparatus that inputs print data and that outputs printed matter. The image forming apparatus may be referred to as a printing apparatus in the sense of an apparatus that outputs printed matter.

The image forming apparatus is not limited to an apparatus dedicated to printing. In addition, the image forming apparatus includes an apparatus for commercial use (for example, also referred to as a "production printer") and an apparatus for office use (for example, also referred to as a "copy machine" or a "multifunction machine"). Printing methods used in the image forming apparatus include, for example, an electrophotographic method, an inkjet method, and an offset printing method.

The print data refers to data to be input to the image forming apparatus. The print data may be, for example, page description language (PDL) data or bitmap data. The PDL data is described in a vector format. Meanwhile, the bitmap data is described in units of pixels.

The print data includes color information. The color information includes, for example, yellow (Y), magenta (M), cyan (C), black (K), and special colors. The special colors include, for example, a metallic color (for example, silver or gold) and a color other than YMCK. The special colors may include, for example, information on the presence or absence of foil stamping, a type of foil stamping, and a position of foil stamping.

A light source refers to a light-emitting body used for observing printed matter. Examples of the light source include a natural light source and an illumination light source. The natural light source includes, for example, the sun and the moon. The illumination light source includes, for example, a light bulb, a fluorescent lamp, and a light emitting diode (LED) light source.

In addition, the light source is classified into a point light source, a plane light source, a parallel light source, and a line light source. In addition, light source color is classified into, for example, warm white, warm neutral white, white, neutral white, and daylight color. The light source color may be represented in terms of a color temperature.

### <Exemplary Embodiment 1>

### <System Configuration>

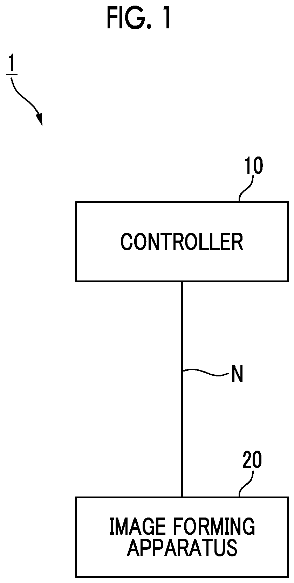

FIG. 1 is a diagram illustrating a configuration example of a printing system 1.

The printing system 1 shown in FIG. 1 includes a controller 10 and an image forming apparatus 20 connected through a signal path. The signal path uses, for example, Ethernet (registered trademark). The controller 10 is an example of an information processing system.

The controller 10 is a so-called computer. The controller 10 has a function of controlling generation of printed matter by the image forming apparatus 20 and a function of three-dimensionally displaying a preview of a color and texture of the printed matter generated from print data provided to the image forming apparatus 20.

The color and texture of the printed matter change depending on an orientation of the printed matter with respect to a light source and an observation position. Regions where a large amount of specularly reflected light enters the observation position exhibit strong glossiness. On the other hand, regions where a small amount of specularly reflected light enters the observation position exhibit less glossiness.

In the case of FIG. 1, the controller 10 and the image forming apparatus 20 are connected in a one-to-one relationship. It should be noted, however, that a plurality of image forming apparatuses 20 may be connected to one controller 10.

### <Hardware Configuration of Controller>

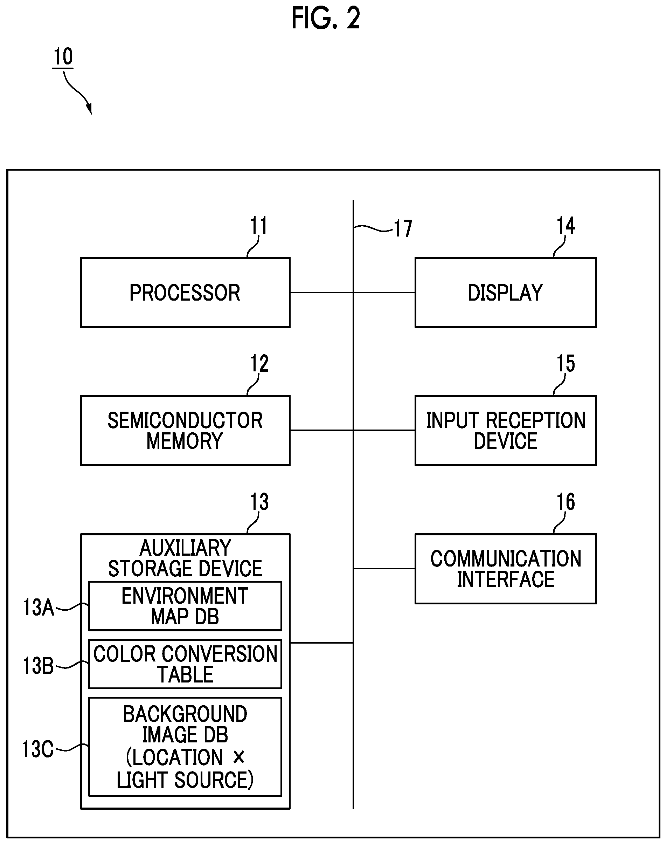

FIG. 2 is a diagram illustrating an example of a hardware configuration of the controller 10.

The controller 10 includes a processor 11, a semiconductor memory 12, an auxiliary storage device 13, a display 14, an input reception device 15, and a communication interface 16. The respective devices are connected via a bus or another signal line 17.

The processor 11 is a device that implements various functions through execution of a program.

The semiconductor memory 12 may include, for example, a read only memory (ROM) in which a unified extensible firmware interface (UEFI) or the like is stored, and a random access memory (RAM) used as a work area of the processor 11.

The processor 11 and the semiconductor memory 12 function as a so-called computer.

The auxiliary storage device 13 is configured with, for example, a hard disk device or a semiconductor storage. A program and various types of data are stored in the auxiliary storage device 13. The program is used as a general term for an operating system (OS) or an application program. The auxiliary storage device 13 stores a program for three-dimensionally reproducing, for example, the appearance of the color and texture of the printed matter. This program is a so-called simulation program. In the present exemplary embodiment, the printed matter generated by the simulation program is referred to as a simulation image.

The auxiliary storage device 13 shown in FIG. 2 includes, for example, an environment map database (DB) 13A, a color conversion table 13B, and a background image DB 13C.

The environment map DB 13A includes a plurality of environment maps having different observation environments. The environment map provides information on a light source used for environment mapping. Information on each pixel of the environment map provides a color and brightness (or a color temperature) of the light source. In other words, the environment map provides a position, a color, a shape, and a size of the light source.

The color conversion table 13B is, for example, a table that provides the appearance of colors according to a relationship between the position and color (or color temperature) of the light source, an observation direction, and an orientation of the printed matter. The observation direction is given by a position of a virtual camera in a simulation space. A preview of an image (that is, a simulation image) of the printed matter captured by the virtual camera is displayed on the display 14. Therefore, the observation direction matches a position of a user who observes the display 14.

The background image DB 13C is a sample image of a background. The sample image is prepared, for example, according to a combination of "name of location" and "information on light source". Candidate locations are given, for example, names of locations. The information on the light source includes, for example, a position, a color, a shape, and a size. The sample image is prepared, for example, for each combination of the candidate location and the position, color, shape, and size of the light source.

The display 14 may be, for example, a liquid crystal display or an organic electro luminescence (EL) display. A rendering image (hereinafter, also referred to as a "simulation image") the reproduces the appearance of the color or texture of the printed matter generated from the print data is displayed on the display 14.

The input reception device 15 is, for example, a device that receives an input from a mouse or an operation button. The input reception device 15 is used to provide an instruction to a program executed by the processor 11.

The communication interface 16 is an interface for communicating with the image forming apparatus 20. The communication interface 16 may be, for example, Ethernet.

### <Hardware Configuration of Image Forming Apparatus>

The image forming apparatus 20 includes a processor, a ROM, a RAM used as a work area of the processor, an auxiliary storage device, an image processing unit, a printing unit, and a communication interface. The respective devices are connected via a bus or another signal line. In addition, the image forming apparatus 20 is also provided with a mechanism for accommodating paper and a mechanism for transporting paper.

The processor controls an operation of each device through execution of a program including an OS or firmware, and outputs printed matter corresponding to the print data.

The auxiliary storage device is configured with, for example, a hard disk device or a semiconductor storage. The auxiliary storage device stores the print data received from the controller 10.

In a case where the print data is given as PDL data, the image processing unit executes a process of converting the PDL into bitmap data. This process is referred to as rasterization. The printing unit is a mechanism unit that forms an image on paper using, for example, an electrophotographic method or an inkjet method.

The communication interface is used for communication with the controller 10.

### <Functional Configuration of Controller>

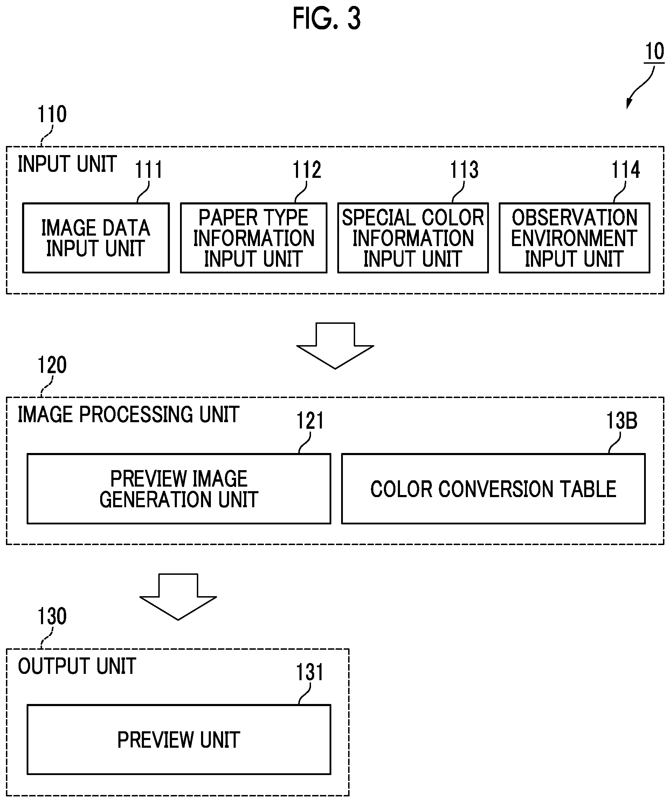

FIG. 3 is a diagram illustrating a functional configuration of the controller 10. In FIG. 3, parts corresponding to the parts in FIG. 2 are denoted by the same reference numerals.

Functional units shown in FIG. 3 are realized through execution of a program that reproduces the appearance of the color or texture of the printed matter.

The functional units of the controller 10 include an input unit 110, an image processing unit 120, and an output unit 130.

The input unit 110 is a functional unit that inputs a generation condition of the printed matter.

The input unit 110 includes an image data input unit 111, a paper type information input unit 112, a special color information input unit 113, and an observation environment input unit 114.

The image data input unit 111 is a functional unit that receives an input of image data. The image data includes, for example, print data including color information. In the present exemplary embodiment, the print data is assumed to be bitmap data.

The paper type information input unit 112 is a functional unit that receives an input of information regarding a type of a medium used for printing. In the present exemplary embodiment, paper is assumed as the medium.

The paper type includes, for example, information on cut paper, roll paper, and processed paper. In addition, the paper type includes, for example, information on a size or tint of the paper.

The special color information input unit 113 is a functional unit that receives an input of information regarding the special color.

The observation environment input unit 114 is a functional unit that receives an input of the observation environment. The observation environment is given, for example, by a combination of "light source information" and "background information".

The "light source information" includes, for example, a position of the light source, a color or color temperature of the light source, and a type of the light source. In the present exemplary embodiment, an illumination light source is assumed as the light source.

The "background information" includes, for example, a combination of a name of a location used as the background and a light source color or a color temperature. The "background information" may include a shape (for example, a surface, a line, or a point) of the light source.

The image processing unit 120 is a functional unit that generates a simulation image that reproduces the appearance of a color or texture in a case where the printed matter is observed in various directions.

The image processing unit 120 includes a preview image generation unit 121. The preview image generation unit 121 generates a simulation image with reference to the color conversion table 13B. In the present exemplary embodiment, the preview image generation unit 121 generates the simulation image as still image data. It should be noted, however, that the simulation image may be generated as moving image data.

The output unit 130 is a functional unit that outputs a preview image including the simulation image generated by the preview image generation unit 121. The output unit 130 includes a preview unit 131. The output unit 130 is a functional unit that displays the generated preview image on the display 14 (see FIG. 2). The preview unit 131 also has a function of outputting the generated simulation image or a preview image including the simulation image and the background image to the auxiliary storage device 13 (see FIG. 2).

### <Display Process of Preview Image>

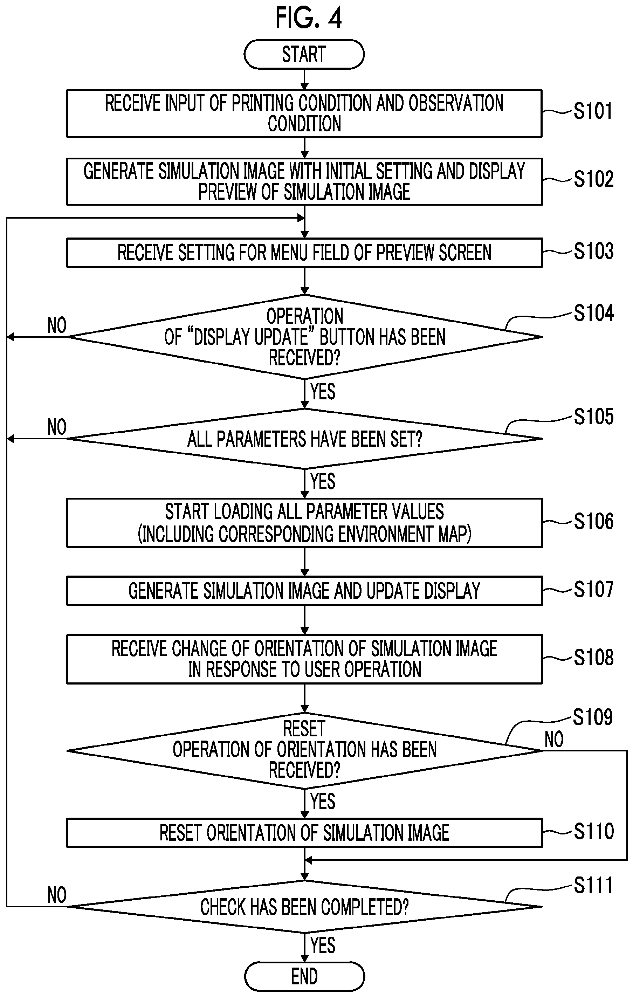

FIG. 4 is a diagram illustrating an example of a display process of a preview image. Reference letter S shown in FIG. 4 means a step.

First, the controller 10 (see FIG. 1) receives an input of printing conditions and observation conditions (step S101). The printing conditions here include various types of data and information received by the input unit 110 (see FIG. 3).

The printing conditions include, for example, image data, paper type, and special color information. The observation conditions include an observation environment of the printed matter.

Next, the controller 10 generates a simulation image with initial settings and displays a preview of the simulation image (step S102). The initial settings are given by the printing conditions and the observation conditions. In the case of the present exemplary embodiment, the observation conditions include, for example, an initial orientation of the printed matter. In the case of the present exemplary embodiment, the initial orientation is given as an orientation of facing a camera directly.

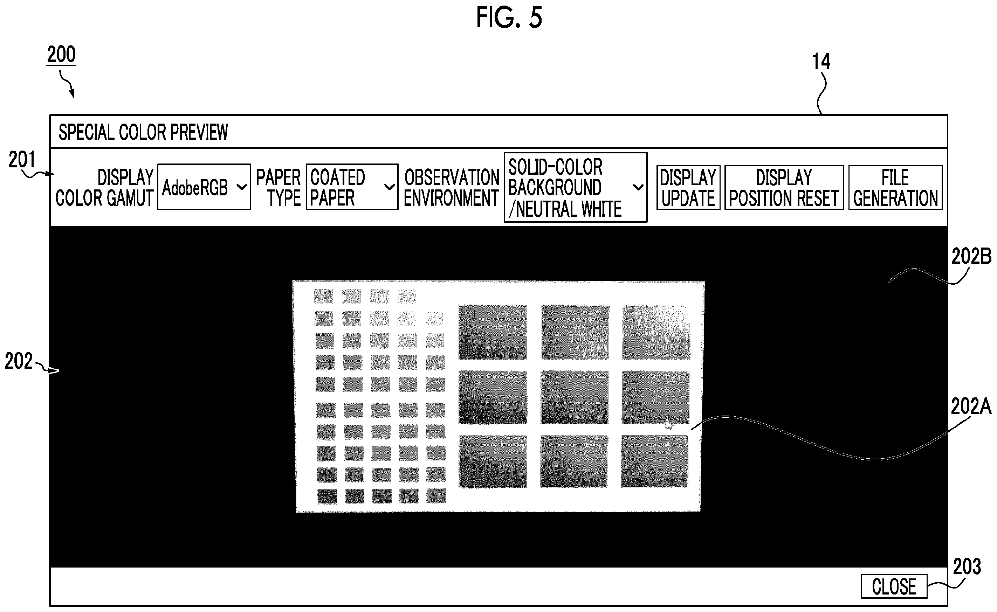

FIG. 5 is a diagram illustrating a display example of a simulation image based on an initial orientation.

A preview screen 200 includes a menu field 201, an image field 202, and a "close" button 203.

In the preview screen 200 shown in FIG. 5, "special color preview" is displayed as a title.

In the menu field 201, a "display color gamut" field, a "paper type" field, an "observation environment" field, a "display update" button, a "display position reset" button, and a "file generation" button are disposed.

The "display color gamut" field is used for setting a color gamut of a display.

The "paper type" field is used for setting paper of printed matter to be simulated.

The "observation environment" field is used for designating an environment for observing a simulation image. In other words, the observation environment is used for setting an image (that is, a background image) to be displayed in a background of the simulation image.

The "display update" button is an example of a button for providing an instruction to display or update the simulation image.

The "display position reset" button is used for resetting the orientation of the simulation image.

The "file generation" button is used for saving the simulation image. Not only the simulation image but also the image field 202 in which the simulation image is combined with the background image may be saved.

In the image field 202 shown in FIG. 5, a simulation image 202A of the printed matter generated using the environment map specified with the initial settings is displayed.

In a case of the simulation image 202A shown in FIG. 5, reflected light from the light source is observed in the vicinity of an upper right portion of the printed matter. A region where the influence of the reflected light is large is observed to be lighter than the actual tint. A background image 202B of the simulation image 202A according to the initial settings is solid black.

In a case where the "close" button 203 is operated, it is regarded that the observation of the simulation image 202A is completed, and the preview screen 200 is closed.

FIG. 4 will be referred to again.

The controller 10 (see FIG. 1) receives settings for the menu field 201 (see FIG. 5) of the preview screen 200 (see FIG. 5) (step S103).

In the case of the present exemplary embodiment, the controller 10 receives settings for the display color gamut, the paper type, and the observation environment. These are examples of a plurality of parameters that affect the appearance of the printed matter. The parameters that affect the appearance of the printed matter may include a special color of ink or toner used for printing.

Next, the controller 10 (see FIG. 1) determines whether or not an operation of the "display update" button has been received (step S104). The "display update" button is disposed in the menu field 201. In the case of the present exemplary embodiment, the operation of the "display update" button is treated as an instruction to load an environment map corresponding to the observation environment and to generate a simulation image in which a value of the set parameter is reflected.

In a case where the operation of the "display update" button is not received, a negative result is obtained in step S104. In this case, the controller 10 returns to step S103. That is, the state returns to a state in which a setting for an unset parameter is received.

On the other hand, in a case where the operation of the "display update" button is received, a positive result is obtained in step S104. In this case, the controller 10 determines whether or not all the parameters have been set (step S105). In the present exemplary embodiment, all the parameters are three parameters of "display color gamut", "paper type", and "observation environment".

In a case where there is a parameter for which the setting has not been completed (that is, in a case where the operation of the "display update" button is received in a state where the unset parameter remains), a negative result is obtained in step S105. In this case, the controller 10 returns to step S103. That is, the controller 10 enters a state of waiting for setting of the unset parameter.

On the other hand, in a case where all the parameters have been set (that is, in a case where the operation of the "display update" button is received in a state where there is no unset parameter), a positive result is obtained in step S105. In this case, the controller 10 starts loading all the parameter values (including the corresponding environment map) (step S106).

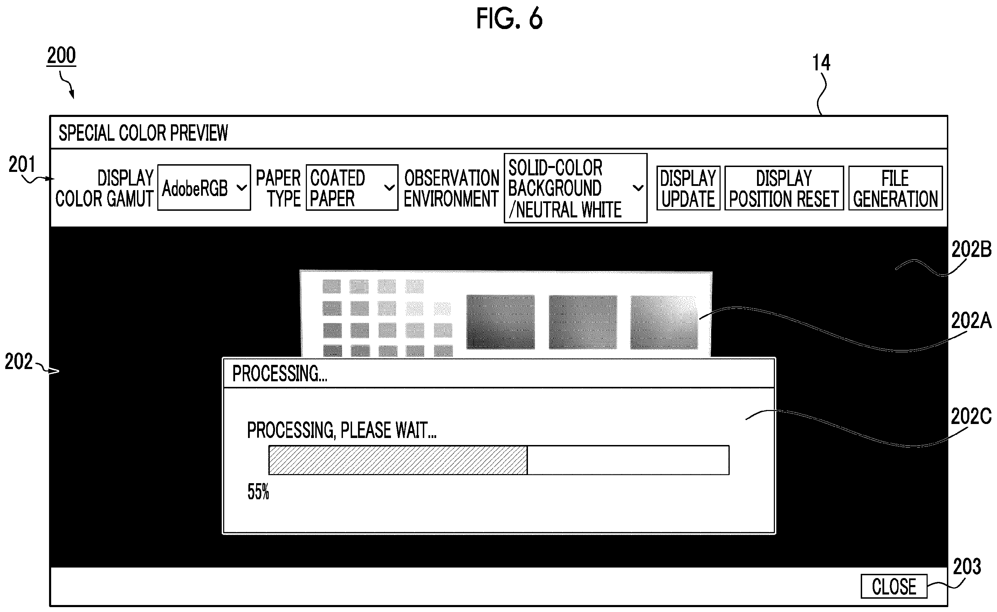

FIG. 6 is a diagram illustrating a loading state of the environment map. In FIG. 6, parts corresponding to the parts in FIG. 5 are designated by the same reference numerals.

In the image field 202 shown in FIG. 6, a dialog box 202C for explaining the progress of the loading is displayed at the center of the screen. The major loading target is the environment map. In the case of FIG. 6, a progress rate is 55%.

FIG. 4 will be referred to again.

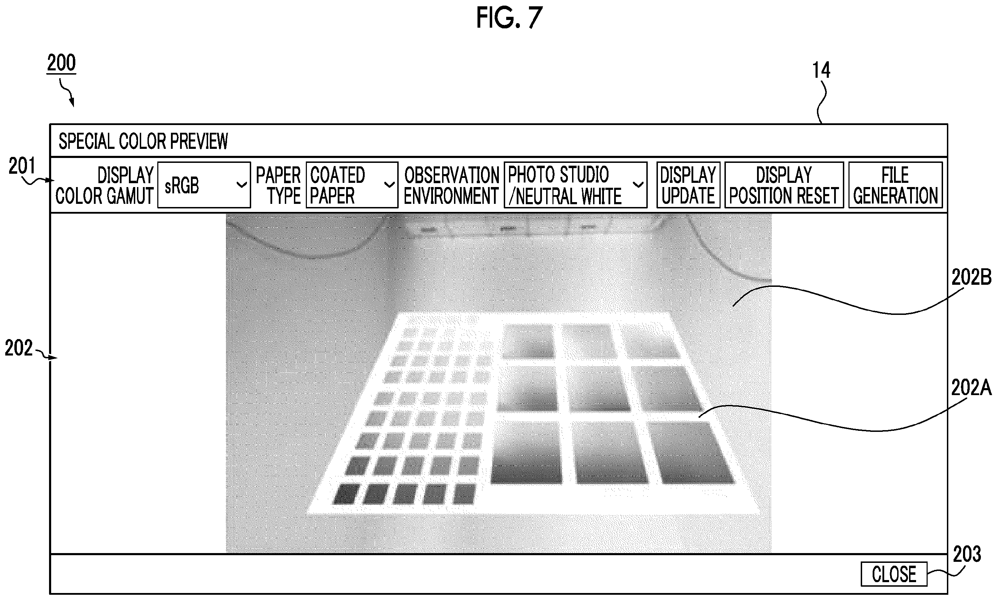

**In** a case where the loading of all the parameter values (including the environment map) is completed, the controller 10 generates a simulation image 202A (see FIG. 7) in which the set parameter values are reflected, and updates the display (step S107).

Next, the controller 10 receives a change of an orientation of the simulation image 202A (see FIG. 7) in response to a user operation (step S108).

FIG. 7 is a diagram illustrating a display example of a simulation image 202A in which all the parameter settings are reflected. **In** the case of FIG. 7, a simulation image 202A simulated with an environment map of "photo studio/neutral white" is combined with a background image 202B of a photo studio having a neutral white lighting fixture as a light source.

In the case of FIG. 7, the simulation image 202A is inclined such that light from the lighting fixture is obliquely incident onto a paper surface.

Glossiness appearing in the simulation image 202A differs depending on a difference in orientation. In addition, unlike the simulation image 202A shown in FIG. 5, the combination with the background image 202B makes it easier to visualize the appearance in a real environment.

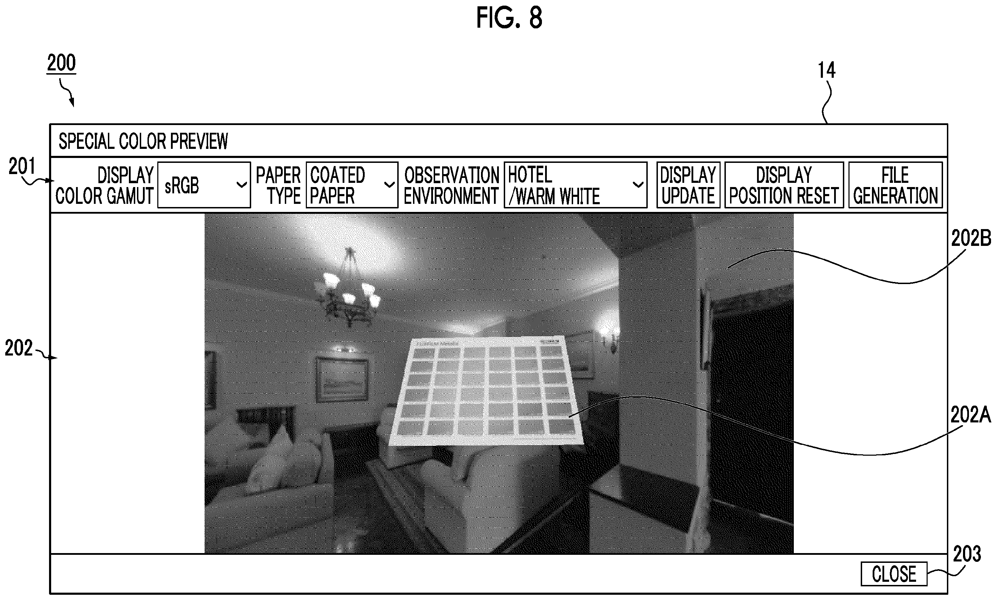

FIG. 8 is a diagram illustrating another display example of a simulation image 202A in which all the parameter settings are reflected. In FIG. 8, parts corresponding to the parts in FIG. 5 are designated by the same reference numerals.

The display example shown in FIG. 8 shows a case where the observation environment is designated as "hotel/warm white".

In the case of FIG. 8, a simulation image 202A simulated with an environment map of "hotel/warm white" is combined with a background image 202B of a hotel having a warm white lighting fixture as a light source.

In the case of FIG. 8 as well, the simulation image 202A is inclined such that light from the lighting fixture is obliquely incident onto a paper surface. Since not only the simulation image 202A but also the background image 202B are displayed, it is easy to visualize the appearance in a real environment.

FIG. 4 will be referred to again.

The controller 10 (see FIG. 1) determines whether or not the reset operation of the orientation has been received (step S109). Specifically, it is determined whether or not the "display position reset" button has been operated in the menu field 201 (see FIG. 7).

In a case where the reset operation of the orientation is received, a positive result is obtained in step S109. In this case, the controller 10 resets the orientation of the simulation image 202A (step S110). Specifically, the orientation of the simulation image 202A returns to the orientation of facing the camera directly. Thereafter, the controller 10 proceeds to step S111.

On the other hand, in a case where the reset operation of the orientation is not received, a negative result is obtained in step S109. In this case, the controller 10 proceeds to step S111.

The controller 10 that has proceeded to step S111 determines whether or not the check has been completed. Specifically, it is determined whether or not the "close" button 203 (see FIG. 5) has been operated.

In a case where the check is not completed, a negative result is obtained in step S111. In this case, the controller 10 returns to step S103 and returns to a state of receiving the change in the setting for the menu field 201 (see FIG. 7). It should be noted, however, that the content displayed on the display 14 (see FIG. 2) is the same as the preview screen 200 (see FIG. 7 or FIG. 8) displayed in step S107. That is, the display 14 displays a preview screen 200 (refer to FIG. 7 or FIG. 8) on which the simulation image 202A and the background image 202B are combined.

In a case where the processing returns from step S111, basically, all the parameters are set. Therefore, in a case where a positive result is obtained in step S104, a positive result is also obtained in step S105.

On the other hand, in a case where the "display update" button is not operated, the parameter can be changed successively any number of times. This is because parameters including the environment map are not loaded each time the parameter is changed.

In a case where the operation of the "display update" button is received, the display of the simulation image 202A (see FIG. 7 or FIG. 8) and the background image 202B (see FIG. 7 or FIG. 8) is updated based on a combination of the parameters at the point of the reception.

In a case where the changed parameter is other than the observation environment (for example, in a case where only the setting of the "paper type" is changed), the controller 10 can also employ a mechanism that does not reload the environment map.

The controller 10 may be configured to, in a case where only a further change in the orientation of the simulation image 202A with respect to the menu field 201 (see FIG. 7) is received, return to step S108.

In a case where the check is completed, a positive result is obtained in step S111. In this case, the controller 10 ends the preview operation.

### <Setting Operation of Parameter and Update of Screen Display>

The following describes a mechanism that prompts the user to set all the parameters before loading the environment map.

### <Mechanism 1>

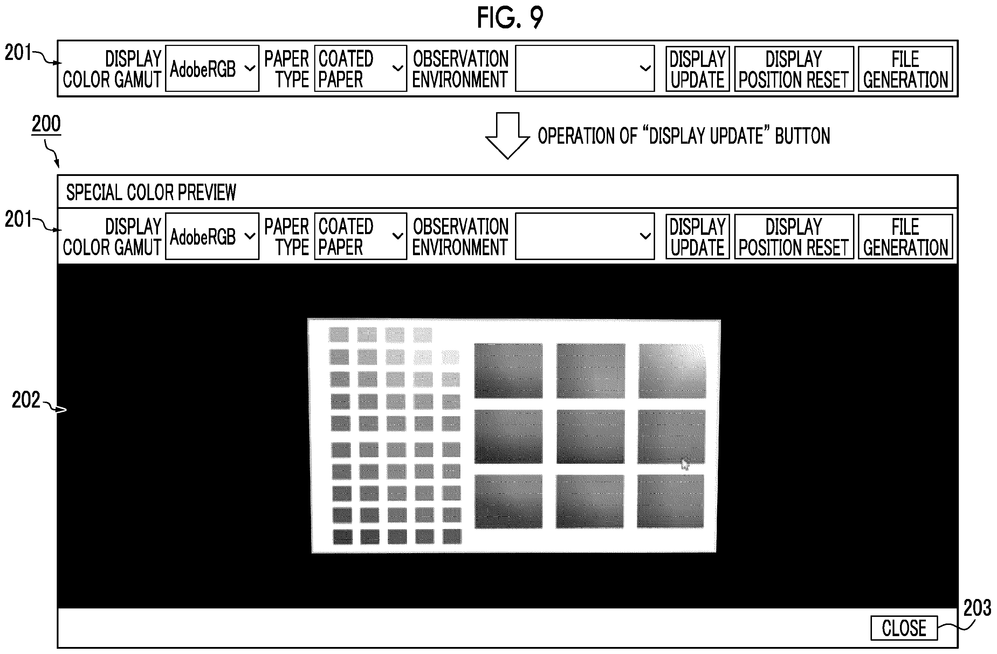

FIG. 9 is a diagram illustrating a screen change in a case where the "display update" button is operated in a state where there is an unset parameter. In FIG. 9, parts corresponding to the parts in FIG. 5 are designated by the same reference numerals.

In the case of FIG. 9, the "observation environment" of the menu field 201 is not set. In FIG. 9, the unset state is represented by a blank. Note that the blank display is an example. For example, a text string such as "not set" may be displayed for the unset parameter.

In the case of FIG. 9, other parameters (that is, the display color gamut and the paper type) have been set. The unset parameters may be all three, any two, or any one.

In the case of FIG. 9, even in a case where the operation of the "display update" button is received in a state where there is an unset parameter, the preview screen 200 does not change. That is, the loading of the environment map is not started, and the simulation reflecting the set parameter value is not executed.

In this way, it is possible to notify the user that the unset parameter remains, because there is no change in the image field 202 even in a case where the "display update" button is operated.

### <Mechanism 2>

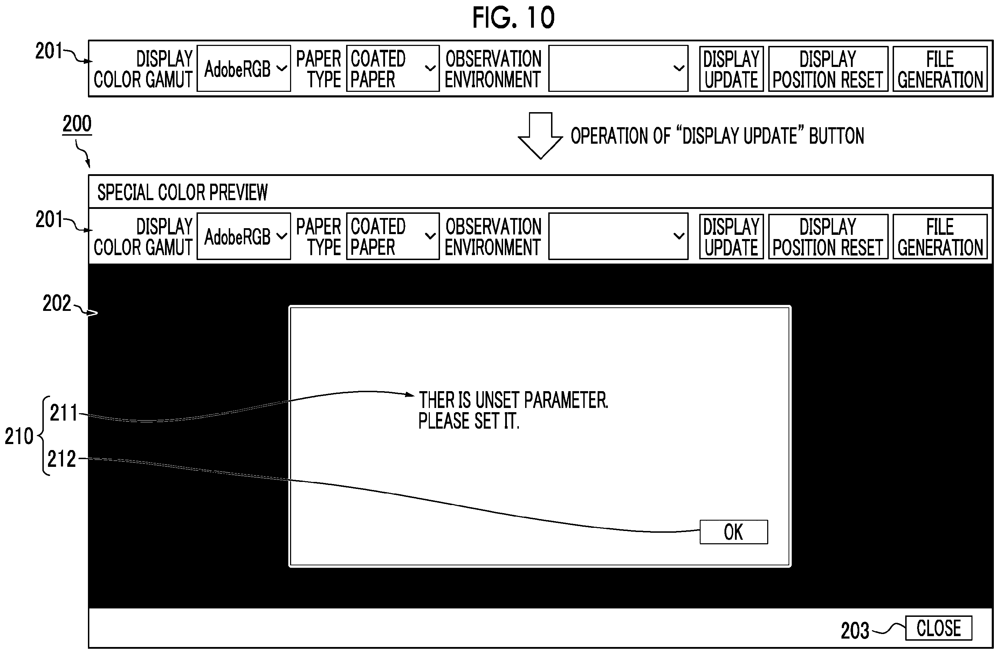

FIG. 10 is a diagram illustrating another screen change in a case where the "display update" button is operated in a state where there is an unset parameter. In FIG. 10, parts corresponding to the parts in FIG. 5 are designated by the same reference numerals.

In the case of FIG. 10 as well, the "observation environment" of the menu field 201 is not set. In the case of FIG. 10, in a case where the operation of the "display update" button is received in a state where there is an unset parameter, a dialog box 210 is displayed in a pop-up manner in the image field 202.

The dialog box 210 shown in FIG. 10 includes a message 211 for notifying of the presence of the unset parameter and an "OK" button 212.

In the case of FIG. 10, the message 211 states "there is unset parameter, please set it".

With this display, it is possible to notify the user that there is an unset parameter.

The dialog box 210 is closed by an operation of the "OK" button 212. It is needless to say that even in a case where the dialog box 210 is closed, the loading of the environment map is not started, and the simulation reflecting the set parameter value is not executed.

In the case of FIG. 10, in a case where the "display update" button is operated after the "observation environment" is set, the loading of the environment map is started, and the simulation reflecting the set parameter value is executed.

### <Mechanism 3>

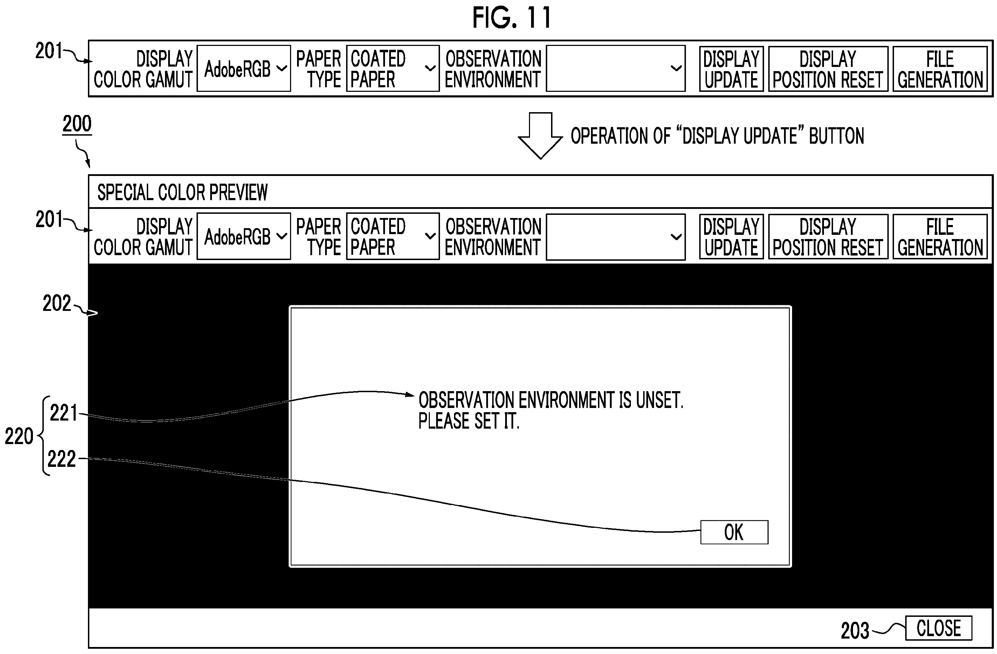

FIG. 11 is a diagram illustrating another screen change in a case where the "display update" button is operated in a state where there is an unset parameter. In FIG. 11, parts corresponding to the parts in FIG. 5 are designated by the same reference numerals.

In the case of FIG. 11 as well, the "observation environment" of the menu field 201 is not set. In the case of FIG. 11, in a case where the operation of the "display update" button is received in a state where there is an unset parameter, a dialog box 220 is displayed in a pop-up manner in the image field 202.

The dialog box 220 shown in FIG. 11 includes a message 221 for notifying of the unset parameter and an "OK" button 222.

In the case of FIG. 11, the message 221 states "observation environment is not set, please set it".

With this display, it is possible to notify the user that there is an unset parameter and that the unset parameter is the "observation environment".

Unlike Mechanism 2, the user can specifically know the unset parameter. In a case where a plurality of parameters are not set, a mechanism may be employed in which names of the plurality of parameters are displayed all at once or in order.

In the case of FIG. 11 as well, in a case where the "OK" button 222 is operated, the dialog box 220 is closed. Thereafter, in a case where the "observation environment" is set and the "display update" button is operated, the loading of the environment map is started, and the simulation reflecting the set parameter value is executed.

### <Mechanism 4>

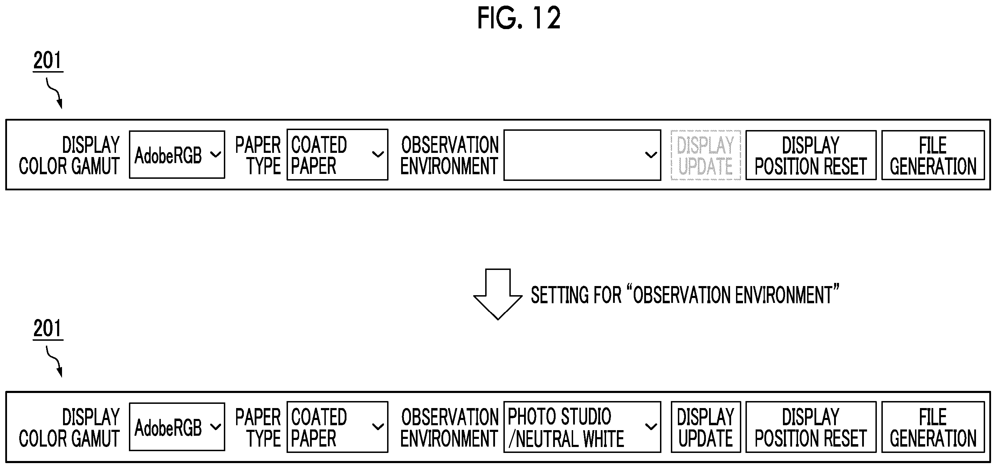

FIG. 12 is a diagram illustrating a display example of the "display update" button in a case where an unset parameter remains and a display example of the "display update" button in a case where all the parameters have been set. In FIG. 12, parts corresponding to the parts in FIG. 5 are designated by the same reference numerals.

In the case of FIG. 12 as well, the "observation environment" of the menu field 201 is not set. In the case of FIG. 12, a display mode of the "display update" button is different between a case where there is an unset parameter and a case where there is no unset parameter.

For example, in a case where the "observation environment" is not set as shown in FIG. 12, the "display update" button is displayed, for example, in a grayed-out manner. In a case where the "display update" button is displayed in a grayed-out manner, even in a case where the user operates the "display update" button, the operation is not regarded as a valid operation. Therefore, as in Mechanism 1, there is no change in the image field 202.

A difference from Mechanism 1 is that it is possible to visually check that the operation on the "display update" button is invalid.

The fact that the operation on the "display update" button is invalid may be represented by, for example, blinking of the button, or may be represented by a warning color such as yellow or red.

On the other hand, in a case where the "observation environment" is set and there are no unset parameters, the "display update" button is displayed in an operable manner. For example, the "display update" button is displayed in the same manner as other parameters. The fact that the operation on the "display update" button is valid may be represented by, for example, highlighting the button or displaying the button in blue.

### <Mechanism 5>

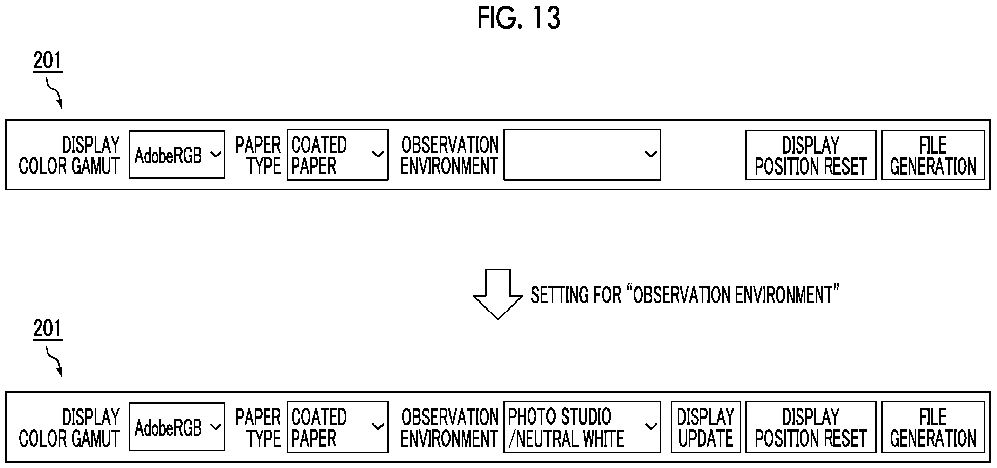

FIG. 13 is a diagram illustrating a display example of the "display update" button in a case where an unset parameter remains and another display example of the "display update" button in a case where all the parameters have been set. In FIG. 13, parts corresponding to the parts in FIG. 5 are designated by the same reference numerals.

In the case of FIG. 13 as well, the "observation environment" of the menu field 201 is not set. In the case of FIG. 13, a display mode of the "display update" button is different between a case where there is an unset parameter and a case where there is no unset parameter.

In the case of Mechanism 5, in a case where there is an unset parameter, the "display update" button itself is not displayed in the menu field 201. That is, the "display update" button is in a physically inoperable state. By not displaying the "display update" button, the user can indirectly know that there is an unset parameter.

In a case where the "observation environment" is set and there are no unset parameters, the "display update" button appears in the menu field 201. As a result, the user can operate the "display update" button.

### <Summary>

In the case of the present exemplary embodiment, the loading of the environment map is not started until all three parameters used for generating the simulation image are set in the menu field 201 (see FIG. 5). That is, in a case where even one of the three parameters remains unset, the loading of the environment map is not started. As a result, the loading of the environment map can be prevented until all of the three parameters used to check the appearance of the glossiness and the like are set.

During the loading of the environment map, the parameter cannot be set. Therefore, by not executing the loading of the environment map until the combination of the parameter settings is confirmed, the user's parameter setting work is improved.

In the case of the present exemplary embodiment, the combination of the parameter settings used by the user to check the appearance of glossiness and the like is confirmed by the operation of the "display update" button. Therefore, even in a case where the three parameters are set, the loading of the environment map is not started until the "display update" button is operated. Therefore, the user can change the combination of the parameters any number of times without interruption due to the loading of the environment map until the "display update" button is operated.

In addition, in the present exemplary embodiment, a mechanism (for example, Mechanism 1) that does not execute the loading of the environment map even in a case where the "display update" button is operated while the unset parameter is present, or a mechanism (for example, Mechanisms 2 to 5) that does not receive the operation of the "display update" button is adopted.

These mechanisms can also prevent the environment map from being loaded in a state where the combination of the three parameters is not yet complete.

### <Exemplary Embodiment 2>

In the present exemplary embodiment, a mechanism that enables the setting of the "observation environment" after the parameters other than the "observation environment" are set will be described.

In the present exemplary embodiment, the parameters other than the "observation environment" are assumed to be "display color gamut", "paper type", and "special color". The special color is also an example of a parameter that affects the appearance of the printed matter.

### <Display Process of Preview Image>

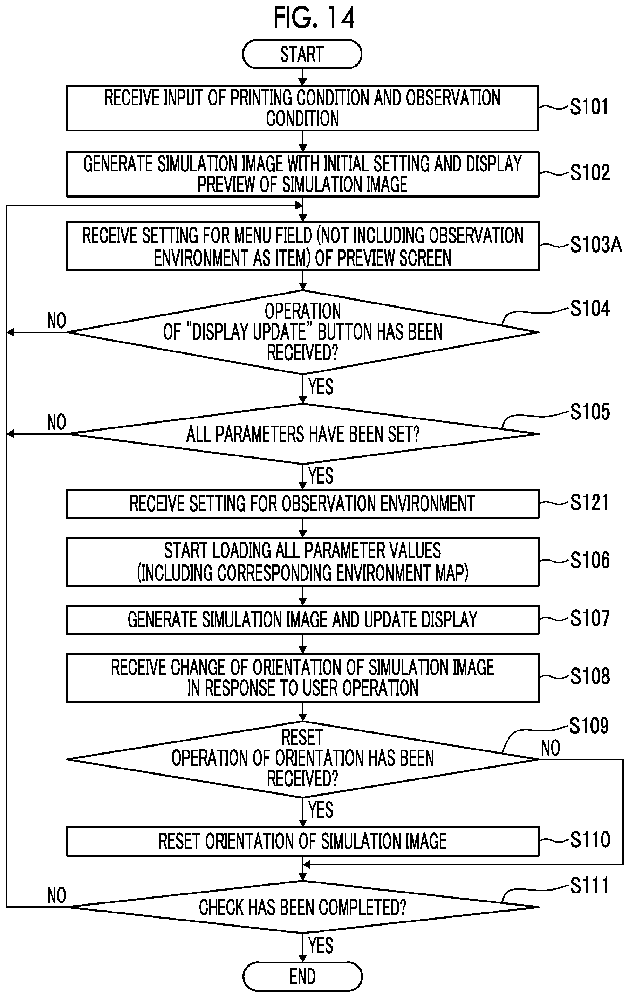

FIG. 14 is a diagram illustrating another example of a display process of a preview image. In FIG. 14, parts corresponding to the parts in FIG. 4 are designated by the same reference numerals.

First, the controller 10 (see FIG. 1) receives an input of printing conditions and observation conditions (step S101).

Next, the controller 10 generates a simulation image with initial settings and displays a preview of the simulation image (step S102).

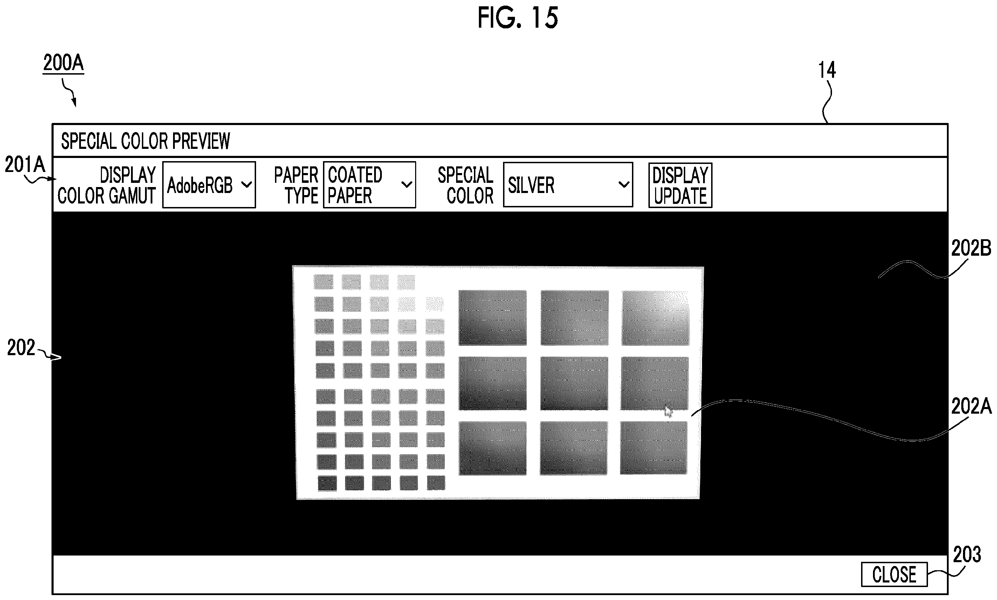

FIG. 15 is a diagram illustrating a display example of a simulation image based on an initial orientation. In FIG. 15, parts corresponding to the parts in FIG. 5 are designated by the same reference numerals.

A preview screen 200A also includes a menu field 201A, an image field 202, and a "close" button 203.

A display mode of the menu field 201A shown in FIG. 15 is different from the menu field 201 shown in FIG. 5.

In a case of the menu field 201A shown in FIG. 15, a "display color gamut" field, a "paper type" field, a "special color" field, and a "display update" button are disposed.

The "observation environment" field, the "display position reset" button, and the "file generation" button are not disposed.

Incidentally, in the "special color" field, it is possible to set a metallic color (for example, silver or gold) or a color other than YMCK used in toner or ink used for printing.

FIG. 14 will be referred to again.

Next, the controller 10 (see FIG. 1) receives settings for the menu field (not including the observation environment as an item) of the preview screen (step S103A). As described above, in the menu field 201A (see FIG. 15), the "display color gamut" field, the "paper type" field, the "special color" field, and the "display update" button are disposed, but the "observation environment" field is not disposed.

Subsequently, the controller 10 determines whether or not the operation of the "display update" button has been received (step S104).

In a case where a negative result is obtained in step S104, the controller 10 returns to step S103A. On the other hand, in a case where a positive result is obtained in step S104, the controller 10 determines whether or not all the parameters have been set (step S105).

In a case where a negative result is obtained in step S105, the controller 10 returns to step S103A. On the other hand, in a case where a positive result is obtained in step S105, the controller 10 receives a setting for the observation environment (step S121).

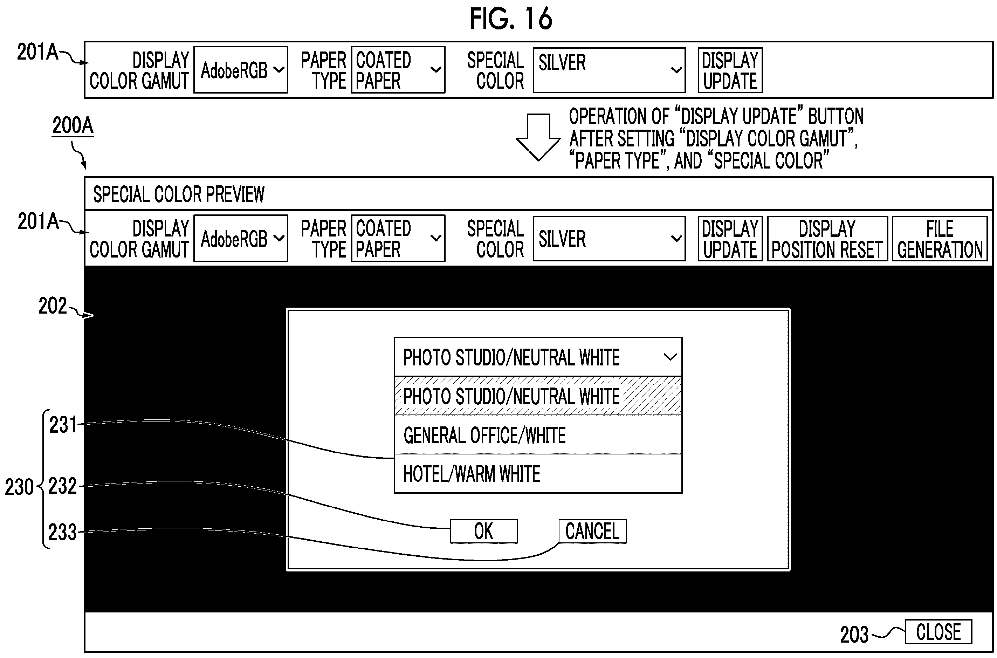

FIG. 16 is a diagram illustrating a dialog box 230 displayed by the operation of the "display update" button. In FIG. 16, parts corresponding to the parts in FIG. 15 are designated by the same reference numerals.

The dialog box 230 shown in FIG. 16 is displayed on a condition in which the "display update" button is operated after setting of all the parameters displayed in the menu field 201A is completed.

Therefore, in a case where even one of the parameters remains unset, the dialog box 230 is not be displayed even in a case where the "display update" button is operated. In the present exemplary embodiment as well, any one of Mechanisms 1 to 5 described above is employed.

In the case of FIG. 16, the dialog box 230 is displayed in a pop-up manner in the image field 202.

The dialog box 230 shown in FIG. 16 includes an "observation environment" field 231, an "OK" button 232, and a "Cancel" button 233.

The "observation environment" field 231 is also in a pull-down menu format, and a state in which "photo studio/neutral white" is set among three options of "photo studio/neutral white", "general office/white", and "hotel/warm white" is illustrated.

In a case where the "OK" button 232 is operated, the controller 10 receives a setting for the "observation environment". In the case of the present exemplary embodiment, in a case where the "OK" button 232 is operated, the dialog box 230 is closed, and then the processing proceeds to step S106. That is, the controller 10 starts loading the environment map or the like.

On the other hand, in a case where the "Cancel" button 233 is operated, the setting of the "observation environment" is canceled. In this case, the controller 10 returns to, for example, the preview screen 200A shown in FIG. 15.

FIG. 14 will be referred to again.

In a case where the setting of the "observation environment" is completed in step S121, the controller 10 executes the processes of steps S106 to S111 in order.

### <Summary>

In the case of the present exemplary embodiment, the "observation environment" field is not disposed in the menu field 201. Therefore, the user is required to finish the setting of other parameters before setting the "observation environment" field. As a result, forgetting to set the parameters other than the observation environment is prevented.

### <Other Exemplary Embodiments>

(1) Although the exemplary embodiments of the present invention have been described above, a technical scope of the present invention is not limited to the scope described in the above-mentioned exemplary embodiments. It is apparent from claims that exemplary embodiments in which various modifications or improvements are added to the above-mentioned exemplary embodiments are also included in the technical scope of the present invention.
(2) In the case of Exemplary Embodiment 1, a mechanism in which the "display update" button is not operated before setting all the parameters that affect the appearance of the printed matter has been described.

On the other hand, there is a possibility that the user who mistakenly considers that the loading of the environment map or the like is automatically started by setting all the parameters that affect the appearance of the printed matter forgets to operate the "display update" button.

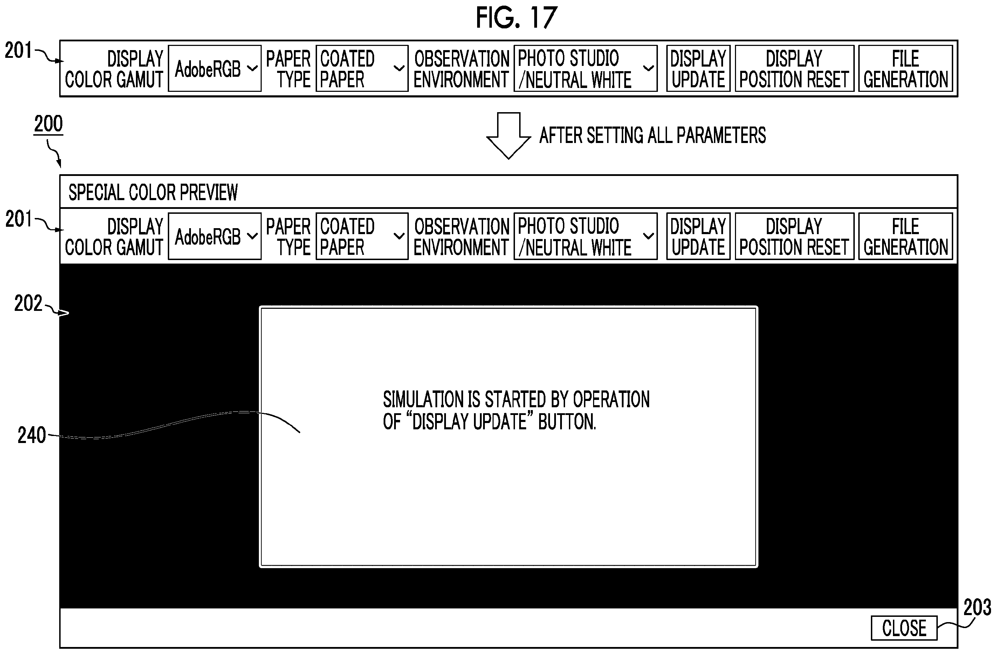

FIG. 17 is a diagram illustrating a display example of a dialog box 240 prompting the user who has completed setting all the parameters affecting the appearance of the printed matter to operate the "display update" button.

In the case of FIG. 17, the dialog box 240 states "simulation is started by operation of "display update" button".

The dialog box 240 may be displayed immediately after completing the setting of all the parameters affecting the appearance of the printed matter is completed, or may be displayed after a preset time has elapsed (for example, 10 seconds).

The display of the dialog box 240 supports the user in operating the "display update" button.

The user may be able to change the presence or absence of the dialog box 240 and the time it takes to display the dialog box 240.

(3) In the above-described exemplary embodiments, the printing system 1 (see FIG. 1) in which the controller 10 (see FIG. 1) and the image forming apparatus 20 (see FIG. 1) are provided independently has been described.

However, the controller 10 may be realized as a part of the image forming apparatus 20.

In addition, the controller 10 may be realized as a so-called cloud server or the like.

(4) In the above-described exemplary embodiments, a case where an image of a location corresponding to an option set in the "observation environment" field is displayed as the background image 202B (see FIG. 7) by being combined with the simulation image 202A (see FIG. 7) has been described. However, the background image 202B may be a solid black or other solid-color background.

(5) In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments.

The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU).

Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage).

The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

(6) The present invention can also be applied to a program and a program product.

### <Supplementary Note>

(((1))) An information processing system comprising:
   a processor configured to:
   execute control of receiving settings for a plurality of parameters that include an observation environment and that affect appearance of printed matter; and
   execute control of loading an environment map corresponding to the observation environment after the plurality of parameters are set.
(((2))) The information processing system according to (((1))), wherein the processor is configured to:
   in a case where the plurality of parameters include an unset parameter, execute control of not loading the environment map even in a case where an instruction to display or update a simulation image is received.
(((3))) The information processing system according to (((2))), wherein the processor is configured to:
   in a case where the instruction to display or update the simulation image is received in a state where the unset parameter remains in the plurality of parameters, execute control of notifying of presence of the unset parameter.
(((4))) The information processing system according to (((3))), wherein the processor is configured to:
   execute control of including information on the unset parameter in the notification of the presence of the unset parameter.
(((5))) The information processing system according to any one of (((1))) to (((4))), wherein the processor is configured to:
   execute control of changing a display mode of a button for receiving an instruction to display or update a simulation image before and after receiving the settings for all of the plurality of parameters.
(((6))) The information processing system according to (((5))), wherein the processor is configured to:
   execute control of not displaying the button until the settings for all of the plurality of parameters are received.
(((7))) The information processing system according to any one of (((1))) to (((6))), wherein the processor is configured to:
   execute control of enabling reception of a setting for the observation environment after receiving the settings for the plurality of parameters excluding the observation environment.
(((8))) The information processing system according to (((7))), wherein the processor is configured to:
   in a case where an instruction to display or update a simulation image is received after receiving the settings for the plurality of parameters excluding the observation environment, execute control of displaying a screen for receiving the setting for the observation environment.
(((9))) The information processing system according to any one of (((1))) to (((8))), wherein the processor is configured to:
   execute control of displaying a screen prompting an operation of a button for providing an instruction to display or update a simulation image after receiving the settings for all of the plurality of parameters.
(((10))) The information processing system according to any one of (((1))) to (((9))), wherein the processor is configured to:
   include, in the plurality of parameters excluding the observation environment, any one or more of a type of special color used for printing the printed matter, a type of paper, a color of paper, or a color gamut of a display.
(((11))) A program for causing a computer to implement:
   a function of receiving settings for a plurality of parameters that include an observation environment and that affect appearance of printed matter; and
   a function of loading an environment map corresponding to the observation environment after the plurality of parameters are set.

With the information processing system according to (((1))), it is possible to improve the work efficiency of the user, unlike a case where the environment map is loaded in a case where even one parameter that affects the preview display is changed.

With the information processing system according to (((2))), it is possible to prevent the environment map from being loaded in a state where all of the plurality of parameters are not set.

With the information processing system according to (((3))), it is possible to notify the user of the presence of the unset parameter.

With the information processing system according to (((4))), it is possible to support an operation of the user.

With the information processing system according to (((5))), it is possible to easily check progress of the settings for the plurality of parameters.

With the information processing system according to (((6))), it is possible to disable reception of the instruction to display or update the simulation image until the setting of the plurality of parameters is completed.

With the information processing system according to (((7))), it is possible to prevent forgetting to set the parameters other than the observation environment.

With the information processing system according to (((8))), by receiving the setting for the observation environment after setting other parameters, it is possible to prevent forgetting to set the other parameters.

With the information processing system according to (((9))), it is possible to notify the user that preparations for loading the environment map are completed.

With the information processing system according to (((10))), it is possible to load the environment map after a parameter other than the observation environment is selected.

With the program according to (((11))), it is possible to improve the work efficiency of the user, unlike a case where the environment map is loaded in a case where even one parameter that affects the preview display is changed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: printing system
10: controller
11: processor
12: semiconductor memory
13: auxiliary storage device
13A: environment map DB
13B: color conversion table
13C: background image DB
14: display
15: input reception device
16: communication interface
17: signal line
20: image forming apparatus
110: input unit
111: image data input unit
112: paper type information input unit
113: special color information input unit
114: observation environment input unit
120: image processing unit
121: preview image generation unit
130: output unit
131: preview unit

## Claims

1. An information processing system comprising:
a processor configured to:
execute control of receiving settings for a plurality of parameters that include an observation environment and that affect appearance of printed matter; and
execute control of loading an environment map corresponding to the observation environment after the plurality of parameters are set.

2. The information processing system according to claim 1, wherein the processor is configured to:
in a case where the plurality of parameters include an unset parameter, execute control of not loading the environment map even in a case where an instruction to display or update a simulation image is received.

3. The information processing system according to claim 2, wherein the processor is configured to:
in a case where the instruction to display or update the simulation image is received in a state where the unset parameter remains in the plurality of parameters, execute control of notifying of presence of the unset parameter.

4. The information processing system according to claim 3, wherein the processor is configured to:
execute control of including information on the unset parameter in the notification of the presence of the unset parameter.

5. The information processing system according to any one of claims 1 to 4, wherein the processor is configured to:
execute control of changing a display mode of a button for receiving an instruction to display or update a simulation image before and after receiving the settings for all of the plurality of parameters.

6. The information processing system according to claim 5, wherein the processor is configured to:
execute control of not displaying the button until the settings for all of the plurality of parameters are received.

7. The information processing system according to any one of claims 1 to 6, wherein the processor is configured to:
execute control of enabling reception of a setting for the observation environment after receiving the settings for the plurality of parameters excluding the observation environment.

8. The information processing system according to claim 7, wherein the processor is configured to:
in a case where an instruction to display or update a simulation image is received after receiving the settings for the plurality of parameters excluding the observation environment, execute control of displaying a screen for receiving the setting for the observation environment.

9. The information processing system according to any one of claims 1 to 8, wherein the processor is configured to:
execute control of displaying a screen prompting an operation of a button for providing an instruction to display or update a simulation image after receiving the settings for all of the plurality of parameters.

10. The information processing system according to any one of claims 1 to 9, wherein the processor is configured to:
include, in the plurality of parameters excluding the observation environment, any one or more of a type of special color used for printing the printed matter, a type of paper, a color of paper, or a color gamut of a display.

11. A program for causing a computer to implement:
a function of receiving settings for a plurality of parameters that include an observation environment and that affect appearance of printed matter; and
a function of loading an environment map corresponding to the observation environment after the plurality of parameters are set.

12. An information processing method comprising:
receiving settings for a plurality of parameters that include an observation environment and that affect appearance of printed matter; and
loading an environment map corresponding to the observation environment after the plurality of parameters are set.
